# EUROPEAN PATENT APPLICATION

(11) **EP 2 369 848 A1**
(43) Date of publication of application: **28.09.2011**
(21) Application number: 10167728.4
(22) Date of filing: 29.06.2010
(51) Int. Cl.: H04N 13/00

(54) **Apparatus and method for capturing three-dimensional image**

(30) Priority: 24.03.2010 TW 99108769
(71) Applicant: Acer Incorporated, Taipei Hsien 221 (TW)
(72) Inventor: HUANG, Wei-Heng, Hsichih Taipei Hsien 221 (TW)
(74) Representative: Chamberlain, Alan James

(57) **Abstract**

An apparatus and a method for capturing a three-dimensional image are provided. The image capturing apparatus comprises a left eye lens, a right eye lens, an operating unit, and a processing unit. The left eye lens is used for capturing a left eye image and the right eye lens is used for capturing a right eye image, in which there is a horizontal shift between the left eye lens and the right eye lens. The operating unit is disposed on the left eye lens and the right eye lens for rotating the left eye lens and the right eye lens by about 90 degrees, respectively. The processing unit is coupled to the left eye lens and the right eye lens and used to combine the left eye image and the right eye image captured by the rotated left eye lens and the right eye lens into a three-dimensional vertical image.

## Description

### CROSS-REFERENCE TO RELATED APPLICATION

This application claims the priority benefit of Taiwan application serial no. 99108769, filed on March 24, 2010. The entirety of the above-mentioned patent application is hereby incorporated by reference herein and made a part of this specification.

### BACKGROUND OF THE INVENTION

### Field of the Invention

The present invention is related to an image capturing apparatus and an image capturing method, and more particularly, to an apparatus and a method for capturing a three-dimensional (3D) image.

### Description of Related Art

When a human watches an object, images of the object are respectively formed on the retina of both eyes. The object images are then transferred to the cerebral cortex of the human and fused to a single object image by a centre of the cerebral cortex. Since the two human eyes are in different positions, the angles for viewing the object by the two eyes have small difference and the object images formed on the retina also have certain parallax. The human relies on the centre of the cerebral cortex to fuse the object images with different viewing angles of the two eyes, so as to create a 3D sense.

Based on aforesaid principle, a conventional 3D camera simulates the left and right human eye and captures a 3D image by disposing two independent lenses on a body of the camera and setting the distance between the lenses as 77 millimeters, which is about an average distance between two human eyes.

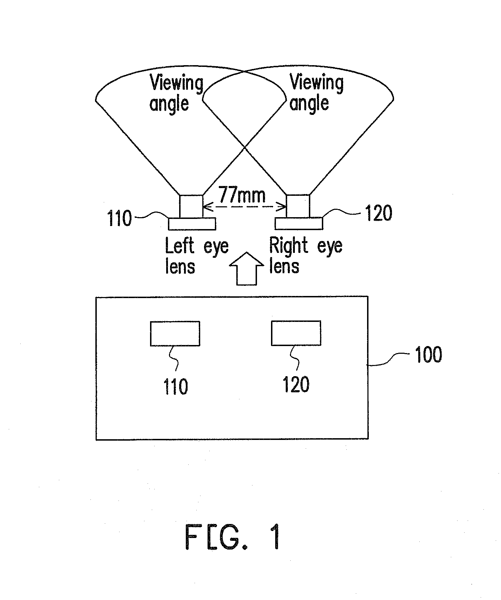

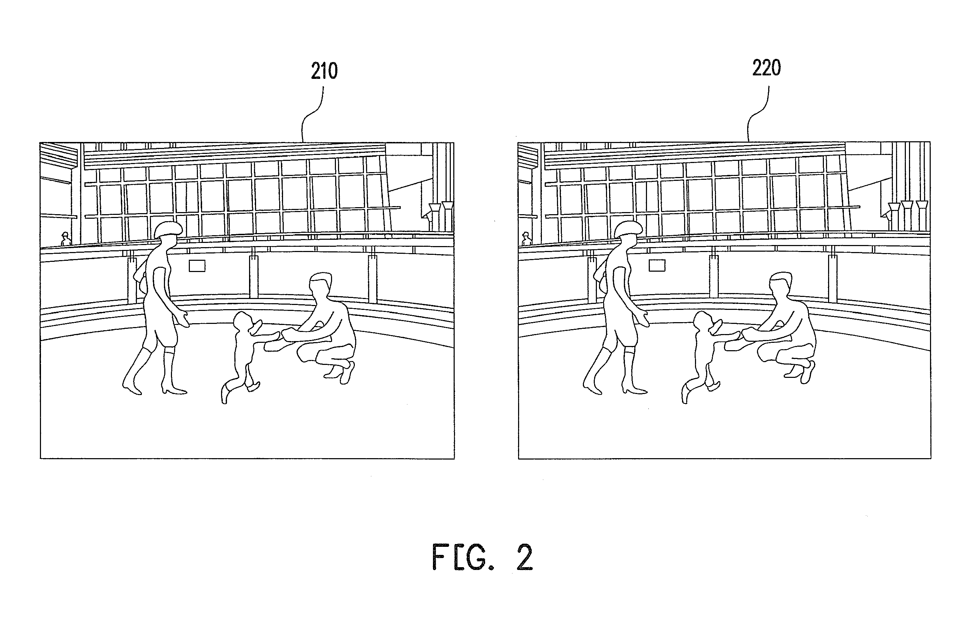

FIG. 1 is a schematic diagram illustrating a method for capturing a 3D horizontal image by using a conventional 3D camera. FIG. 2 is an example of the 3D horizontal image. Referring to FIG. 1, the conventional 3D camera 100 is disposed with a left eye lens 110 and a right eye lens 120, and there is a horizontal shift of about 77 millimeters between the left eye lens 110 and the right eye lens 120. When a user intends to take a 3D image, he/she only needs to aim the 3D camera 100 toward the object, such that the left eye lens 110 and the right eye lens 120 capture horizontal images 210 and 220 with different viewing angles (as shown in FIG. 2), in which the two images have a distance difference in a horizontal direction (i.e. a parallax). The 3D camera 100 then combines the two images so as to generate a 3D horizontal image.

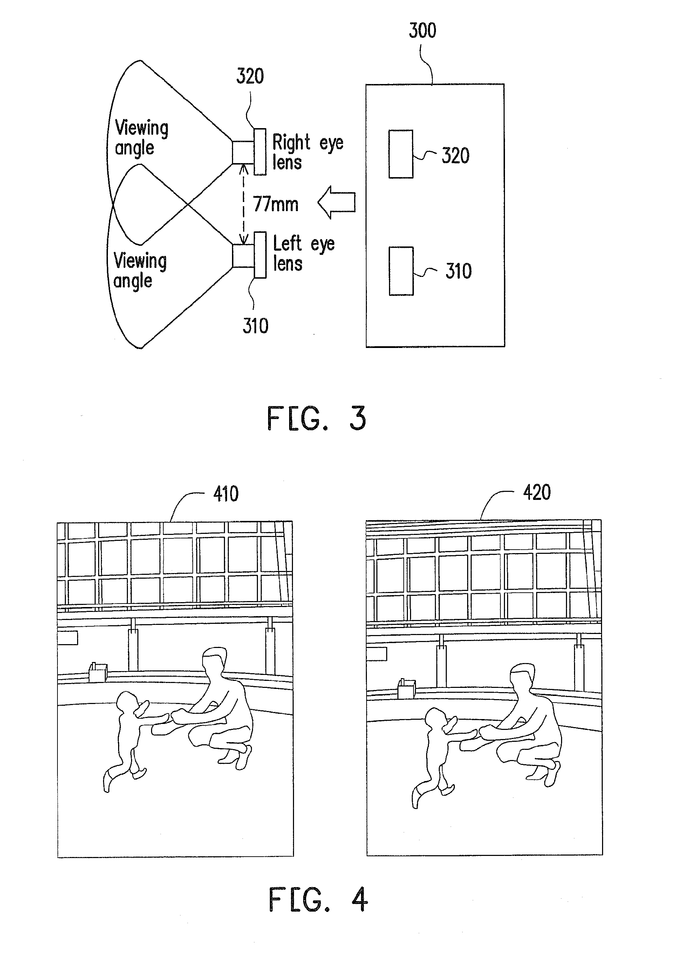

However, since the camera has a restriction on hardware design, when a user intends to capture a vertical image by using aforesaid 3D camera, he/she has to rotate the camera and holds the camera in a vertical gesture. FIG. 3 is a schematic diagram illustrating a method for capturing a 3D vertical image by using a conventional 3D camera. FIG. 4 is an example of the 3D vertical image. As shown in FIG. 3, when the 3D camera 300 is held in a vertical gesture by a user, the left eye lens 310 and the right eye lens 320 have a vertical shift therebetween, which is about 77 millimeters. When the user takes the 3D image, the left eye lens 310 and the right eye lens 320 capture the vertical images 410 and 420 with different viewing angles (as shown in FIG. 4), Although the two images also have a distance difference, the difference is in a vertical direction, which is different from a horizontal direction of the parallax on the human eyes, and therefore the human eyes are not able to combine these two images into a 3D image.

It is known from the above that the conventional 3D camera still has its inborn deficiency and is not able to capture 3D images.

### SUMMARY OF THE INVENTION

The present invention is directed to an apparatus for capturing a 3D image, which captures the 3D image by rotating a left eye lens and a right eye lens of a camera.

The present invention is directed to a method for capturing a 3D image, in which a user may use a camera to take a 3D image by executing a vertical photographing function of the camera or pushing a mechanical rotation component of camera lenses.

The present invention provides an apparatus for capturing a 3D image, which includes a left eye lens, a right eye lens, an operation unit and a processing unit. The left eye lens is used for capturing a left eye image, the right eye lens is used for capturing a right eye image, and there is a horizontal shift between the left eye lens and the right eye lens. The operation unit is disposed on the left eye lens and the right eye lens and used to respectively rotate the left eye lens and the right eye lens by about 90 degrees when receiving a vertical photographing operation. The processing unit is coupled to the left eye lens and the right eye lens and used to combine the left eye image and the right eye image captured by the rotated left eye lens and right eye lens into a 3D vertical image.

In one embodiment of the present invention, the image capturing apparatus further comprises an input unit, which is used to receive an input operation for a vertical photographing function of the image capturing apparatus from a user.

In one embodiment of the present invention, the operation unit comprises a first driving unit, disposed on the left eye lens, for rotating the left eye lens; and a second driving unit, disposed on the right eye lens, for rotating the right eye lens.

In one embodiment of the present invention, the processing unit further comprises being coupled to the input unit, the first driving unit and the second driving unit, and used to control the first driving unit and the second driving unit to respectively rotate the left eye lens and the right eye lens by about 90 degrees when receiving a vertical photographing operation.

In one embodiment of the present invention, the left eye lens comprises a first optical component for controlling a light entering the left eye lens, and the right eye lens comprises a second optical component for controlling a light entering the right eye lens

In one embodiment of the present invention, the left eye lens further comprises a first light sensing component for sensing an intensity of the light entering the left eye lens, and the right eye lens further comprises a second light sensing component for sensing an intensity of the light entering the right eye lens.

In one embodiment of the present invention, the operation unit rotates the first light sensing unit of the left eye lens and the second light sensing unit of the right eye lens to capture the left eye image and the right eye image when receiving a vertical photographing operation.

The present invention provides a method for capturing 3D image, adapted to an image capturing apparatus having a left eye lens and a right eye lens, in which there is a horizontal shift between the left eye lens and the right eye lens. In the method, the left eye lens and the right eye lens are rotated by about 90 degrees when a vertical photographing operation is received. Then, a left eye image and a right eye image are respectively captured by the left eye lens and the right eye lens. Finally, the left eye image and the right eye image are combined into a 3D vertical image.

In one embodiment of the present invention, the step of receiving the vertical photographing operation comprises receiving an input operation for a vertical photographing function of the image capturing apparatus or a mechanical operation for a mechanical rotation component of the image capturing apparatus from a user.

In one embodiment of the present invention, the step of respectively rotating the left eye lens and the right eye lens by about 90 degrees comprises respectively pushing the left eye lens and the right eye lens to rotate by about 90 degrees by using a stepper motor.

Based on the above, the apparatus and the method for capturing a 3D image of the present invention rotate the left eye lens and the right eye lens by about 90 degrees to capture vertical images while maintaining the horizontal shift between the left eye lens and the right eye lens. Accordingly, the present invention enables a user to use same camera to capture 3D horizontal and vertical images.

In order to make the aforementioned and other features and advantages of the invention more comprehensible, embodiments accompanying figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic diagram illustrating a method for capturing a 3D horizontal image by using a conventional 3D camera.

FIG. 2 is an example of the 3D horizontal image.

FIG. 3 is a schematic diagram illustrating a method for capturing a 3D vertical image by using a conventional 3D camera.

FIG. 4 is an example of the 3D vertical image.

FIG. 5 is a schematic diagram illustrating a method for capturing a 3D image by using an image capturing apparatus according to an embodiment of the present invention

FIG. 6 is a block diagram of an apparatus for capturing a 3D vertical image according to an embodiment of the present invention.

FIG. 7 is a flowchart illustrating a method for capturing a 3D image according to an embodiment of the present invention.

FIG. 8 is an example of a 3D vertical image according to an embodiment of the present invention.

FIG. 9 is a block diagram of an apparatus for capturing a 3D vertical image according to an embodiment of the present invention.

FIG. 10 is a block diagram of an apparatus for capturing a 3D vertical image according to an embodiment of the present invention.

### DESCRIPTION OF EMBODIMENTS

No matter it intends to take a 3D horizontal image or a 3D vertical image, a left eye lens and a right eye lens of a camera are necessary to simulate a left eye and a right eye of a human, that means, a horizontal shift (i.e. 77 mm) between the two lenses should be kept. Since the positions of the lenses cannot be changed, the one that can be changed are the lenses themselves. Base on this concept, the present invention turns the left eye lens and the right eye lens from a landscape position to a portrait position by rotating the two lenses by about 90 degrees. Accordingly, the images captured by the rotated left eye lens and right eye lens are vertical images and can be combined into a 3D vertical image.

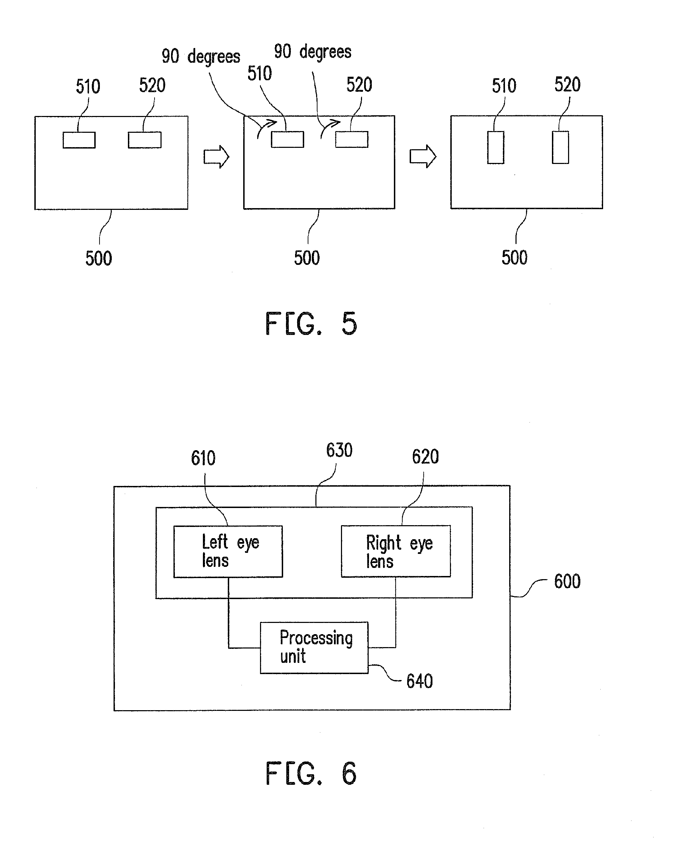

FIG. 5 is a schematic diagram illustrating a method for capturing a 3D image by using an image capturing apparatus according to an embodiment of the present invention. Referring to FIG. 5, the image capturing apparatus 500 of the present embodiment is kept in a landscape position and is disposed with a left eye lens 510 and a right eye lens 520. When a user intends to take a 3D horizontal image, he/she can use the left eye lens 510 and the right eye lens 520 to capture a left eye image and a right eye image, which are then combined by the image capturing apparatus 500 so as to generate the 3D horizontal image. On the other hand, when the user intends to take a 3D vertical image, he/she may rotate the left eye lens 510 and the right eye lens 520 in a clockwise direction by about 90 degrees and use the rotated left eye lens 510 and right eye lens 520 to capture a left eye image and a right eye image, which are then combined by the image capturing apparatus 500 so as to generate the 3D vertical image.

FIG. 6 is a block diagram of an apparatus for capturing a 3D vertical image according to an embodiment of the present invention. Referring to FIG. 6, the image capturing apparatus 600 of the present embodiment comprises a left eye lens 610, a right eye lens 620, an operation unit 630 and a processing unit 640. The left eye lens 610 is adapted to simulate the left human eye and used to capture a left eye image; the right eye lens 620 is adapted to simulate the right human eye and used to capture a right eye image, in which there is a horizontal shift of about 77 mm between the left eye lens 610 and the right eye lens 620 for simulating the distance between actual human eyes. The operation unit 630 is disposed on the left eye lens 610 and the right eye lens and used to respectively rotate the left eye lens 610 and the right eye lens 620 by about 90 degrees to capture the left eye image and the right eye image according to a vertical photographing operation from a user. The processing unit 640 is coupled to the left eye lens 610 and the right eye lens 620 and used to combine the left eye image and the right eye image captured by the rotated left eye lens 610 and right eye lens 620 into a 3D vertical image.

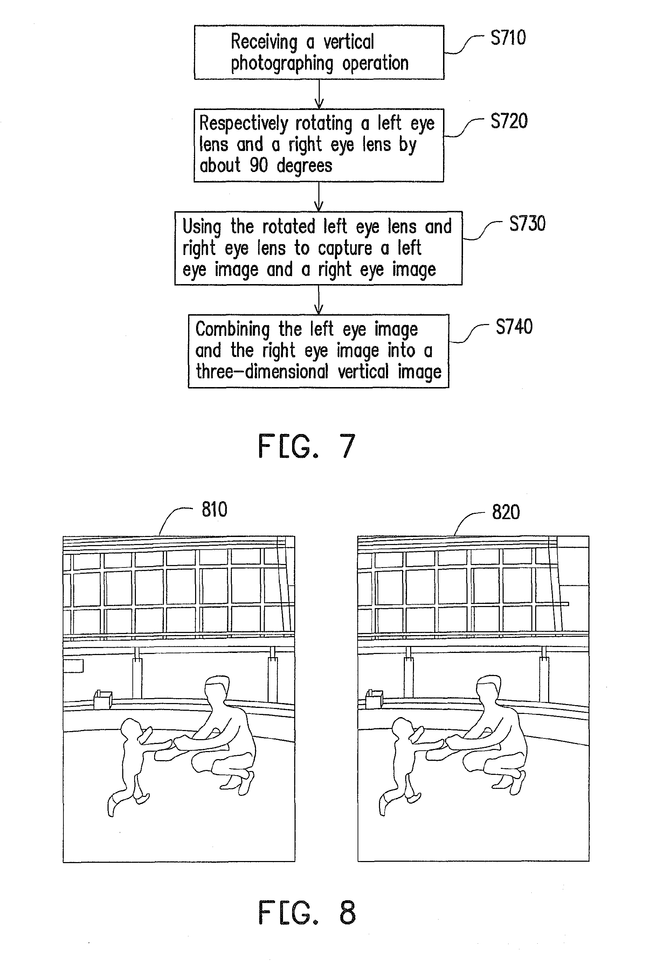

To operate aforesaid image capturing apparatus 600, the present invention also provides corresponding operating method. FIG. 7 is a flowchart illustrating a method for capturing a 3D image according to an embodiment of the present invention. Referring to FIG. 7, the method of the present embodiment is adapted to the image capturing apparatus 600 of FIG. 6 and is suitable for controlling the image capturing apparatus 600 to rotate lenses to capture 3D vertical images when receiving a vertical photographing operation for the image capturing apparatus 600 from a user. The method comprises following steps.

First, the image capturing apparatus 600 receives a vertical photographing operation from a user (step S710). The image capturing apparatus 600 receives, for example, an input operation for a vertical photographing function from a user, or a mechanical operation for a mechanical rotation component disposed therein from a user.

Next, the image capturing apparatus 600 respectively rotates the left eye lens 610 and the right eyes 620 by about 90 degrees according to the vertical photographing operation of the user (step S720). In detail, the image capturing apparatus may rotate the lenses through a physical or an electrical means. If a physical means is adopted, a mechanical rotation component (not shown) may be disposed on the left eye lens 610 and the right eye lens 620 of the image capturing apparatus 600 and used as the operation unit 630. The mechanical rotation component is jointly operated with the left eye lens 610 and the right eye lens 620. When the user pushes the mechanical rotation component, the left eye lens 610 and the right eye lens 620 are rotated. If an electrical means is adopted, a stepper motor (not shown) is disposed on the left eye lens 610 and the right eye lens 620 and used to push the left eye lens 610 and the right eye lens 620 to rotate.

After rotation, the left eye lens 610 and the right eye lens 620 respectively capture a left eye image and a right eye image (step S730), which are transferred to the processing unit 640. The processing unit 640 then combines the two images into a 3D vertical image (step S740). For example, FIG. 8 is an example of a 3D vertical image according to an embodiment of the present invention. Referring to FIG. 8, the vertical images 810 and 820 are the images captured by the rotated left eye lens 610 and right eye lens 620, in which there is a horizontal distance difference therebetween, which fits a parallax between two human eyes. Accordingly, a 3D vertical image is generated by combining the two images.

It is noted that, in one embodiment, a method for the processing unit 640 dealing with the left eye image and the right eye image is, for example, to respectively store the left eye image and the right eye image as a file with a specific name and store in the same file clip. When the user intends to watch the 3D vertical image, he/she may direct a read path of the 3D image display device (e.g. 3D TV) to the file clip, so as to read the left eye image and the right eye image and generate the 3D vertical image perceptible for the user. In another embodiment, the processing unit 640 may also store the left eye image and the right eye image as a single file and correspondingly change a read manner of the 3D image display device, which also can provide display effect of the 3D vertical image.

Through aforesaid methods, the present invention not only enables the user to use the image capturing apparatus 600 to take landscape images, but also enables the user to switch the image capturing apparatus 600 to a vertical photographing mode at will, so as to take portrait images. As such, a function of taking 3D images in different angles by using a single device is achieved.

It is noted that, regarding aforesaid means of rotating lenses using a stepper motor, the present invention further separates the means into two types according to a design of the device: one means is to directly rotate the whole lens; and the other means is to only rotate a light sensing component inside the lens. Embodiments are respectively given blew for further illustration.

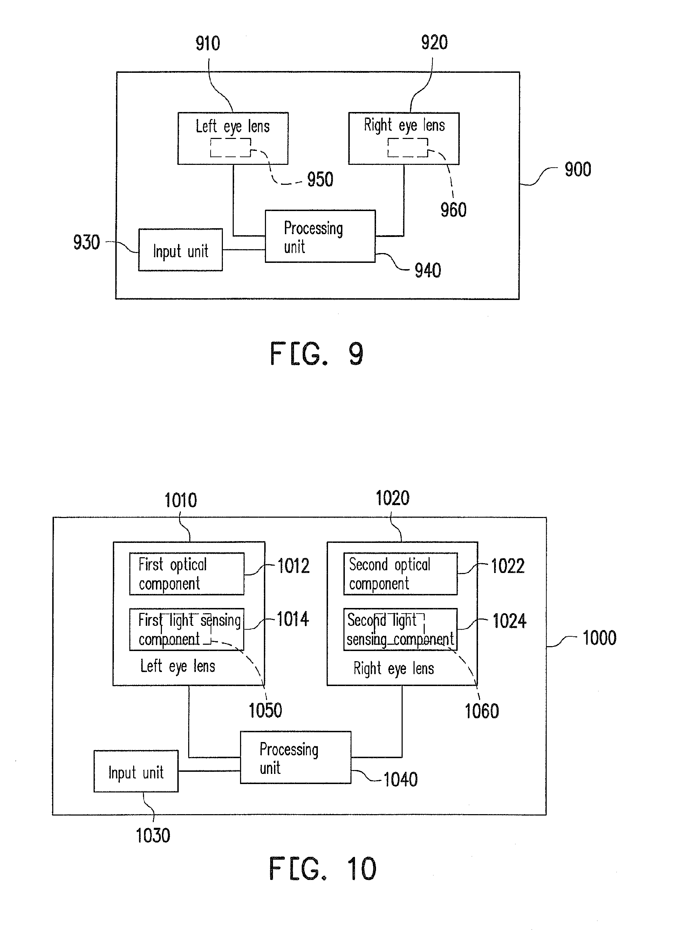

Regarding the means of directly rotating the lens, FIG. 9 is a block diagram of an apparatus for capturing a 3D vertical image according to an embodiment of the present invention. Referring to FIG. 9, the image capturing apparatus 900 of the present embodiment includes, for example, a left eye lens 910, a right eye lens 920, an input unit 930, a processing unit 940, a first driving unit 950 disposed on the left eye lens 910 and a second driving unit 960 disposed on the right eye lens 920. The input unit 930 is, for example, a physical button or a touch screen disposed on the image capturing apparatus 900. As such, the user may execute a vertical photographing function of the image capturing apparatus 900 by pressing the physical button or touching the touch screen.

When receiving the vertical photographing operation from the user, the input unit 930 generates an electrical signal and sends the electrical signal to the processing unit 940. Accordingly, the processing unit 940 respectively controls the first driving unit 950 and the second driving unit 960 to rotate the left eye lens 910 and the right eye lens 920 by about 90 degrees. After the left eye lens 910 and the right eye lens 920 are rotated, the processing unit 940 controls the left eye lens 910 and the right eye lens 920 to respectively capture a left eye image and a right eye image, and then combines the captured left eye image and the right eye image into a 3D vertical image.

Regarding the means of only rotating the light sensing component inside the lens, FIG. 10 is a block diagram of an apparatus for capturing a 3D vertical image according to an embodiment of the present invention. Referring to FIG. 10, the image capturing apparatus 1000 of the present embodiment includes, for example, a left eye lens 1010, a right eye lens 1020, an input unit 930, a processing unit 1040, a first driving unit 1050 disposed on the left eye lens 1010 and a second driving unit 1060 disposed on the right eye lens 1020. The left eye lens 1010 includes a first optical component 1012 and a first light sensing component 1014, and the right eye lens 1010 includes a second optical component 1022 and a second light sensing component 1024. The first optical component 1012 and the second optical component 1022 are, for example, consisted of one or a plurality of lenses and used to confine the light entering the left eye lens 1010 and the right eye lens 1020. The first light sensing component 1014 and the second light sensing component 1024 are, for example, a charge coupled device (CCD) module or a complementary metal-oxide semiconductor (CMOS) module, and are respectively used to sense an intensity of the light entering the left eye lens 1010 and the right eye lens 1020, so as to generate the left eye image and the right eye image.

It is noted herein that, the processing unit 1040 of the present embodiment first controls the first driving unit 1050 and the second driving unit 1060 to respectively rotate the first light sensing component 1014 of the left eye lens 1010 and the second light sensing component 1024 of the right lens 1020 by about 90 degrees when receiving a vertical photographing operation on the input unit 1030 from the user. After the first light sensing component 1014 and the second light sensing component 1024 are rotated, the processing unit 1040 further controls the first light sensing component 1014 and the second light sensing component 1024 to respectively capture a left eye image and a right eye image, so as to combine the captured left eye image and the right eye image into a 3D vertical image.

To sum up, the apparatus and the method for capturing a 3D image of the present invention dispose a rotating mechanism on the lenses of a 3D camera. When a user needs to take a 3D vertical image, he/she may rotate the lenses by about 90 degrees through function setting or manual operation, such that the 3D vertical image formed by the images captured by the lenses fits the parallax between two human eyes

Although the invention has been described with reference to the above embodiments, it will be apparent to one of the ordinary skill in the art that modifications to the described embodiment may be made without departing from the spirit of the invention. Accordingly, the scope of the invention will be defined by the attached claims not by the above detailed descriptions.

## Claims

1. An apparatus (500, 600, 900, 1000) for capturing a three-dimensional image, comprising:
a left eye lens (510, 610, 910, 1010), for capturing a left eye image;
a right eye lens (520, 620, 920, 1020), for capturing a right eye image, wherein there is a horizontal shift between the left eye lens (510, 610, 910, 1010) and the right eye lens (520, 620, 920, 1020);
a operation unit (630), disposed on the left eye lens (510, 610, 910, 1010) and the right eye lens (520, 620, 920, 1020), for respectively rotating the left eye lens (510, 610, 910, 1010) and the right eye lens (520, 620, 920, 1020) by about 90 degrees when receiving a vertical photographing operation; and
a processing unit (640, 940, 1040), coupled to the left eye lens (510, 610, 910, 1010) and the right eye lens (520, 620, 920, 1020), for combining the left eye image and the right eye image captured by the rotated left eye lens (510, 610, 910, 1010) and right eye lens (520, 620, 920, 1020) into a three-dimensional vertical image.

2. The apparatus as claimed in claim 1, further comprising:
an input unit (930, 1030), for receiving an input operation for a vertical photographing function of the apparatus (900, 1000) from a user.

3. The apparatus as claimed in claim 2, wherein the operation unit (630) comprises:
a first driving unit (950), disposed on the left eye lens (910), for rotating the left eye lens (910); and
a second driving unit (960), disposed on the right eye lens (920), for rotating the right eye lens (920).

4. The apparatus as claimed in claim 3, wherein the processing unit (940) further comprises being coupled to the input unit (930), the first driving unit (950) and the second driving unit (960), for controlling the first driving unit (950) and the second driving unit (960) to respectively rotate the left eye lens (910) and right eye lens (920) by about 90 degrees when the input unit (930) receives the vertical photographing operation.

5. The apparatus as claimed in claim 1, wherein the left eye lens (1010) comprises a first optical component (1012) for controlling a light entering the left eye lens (1010), and the right eye lens (1020) comprises a second optical component (1022) for controlling a light entering the right eye lens (1020).

6. The apparatus as claimed in claim 5, wherein the left eye lens (1010) further comprises a first light sensing component (1014) for sensing an intensity of the light entering the left eye lens (1010), and the right eye lens (1020) further comprises a second light sensing component (1024) for sensing an intensity of the light entering the right eye lens (1020).

7. The apparatus as claimed in claim 6, wherein the operation unit (1050, 1060) comprises respectively rotating the first light sensing component (1014) of the left eye lens (1010) and the second light sensing component (1024) of the right eye lens (1020) by about 90 degrees so as to capture the left eye image and the right eye image when receiving the vertical photographing operation.

8. A method for capturing a three-dimensional image, adapted to an image capturing apparatus (500, 600, 900, 1000) having a left eye lens (510, 610, 910, 1010) and a right eye lens (520, 620, 920, 1020), wherein there is a horizontal shift between the left eye lens (510, 610, 910, 1010) and the right eye lens (520, 620, 920, 1020), the method comprising:
receiving (S710) a vertical photographing operation;
respectively rotating (S720) the left eye lens (510, 610, 910, 1010) and the right eye lens (520, 620, 920, 1020) by about 90 degrees;
respectively capturing (S730) a left eye image and a right eye image by using the rotated left eye lens (510, 610, 910, 1010) and the right eye lens (520, 620, 920, 1020); and
combining (S740) the left eye image and the right eye image into a three-dimensional image.

9. The method as claimed in claim 8, wherein the step of receiving the vertical photographing operation comprises:
receiving an input operation for a vertical photographing function of the image capturing apparatus (500, 600, 900, 1000) from a user or a mechanical operation for a mechanical rotation component of the image capturing apparatus (500, 600, 900, 1000) from a user.

10. The method as claimed in claim 8, wherein the step of respectively rotating the left eye lens (510, 610, 910, 1010) and the right eye lens (520, 620, 920, 1020) by about 90 degrees comprises:
respectively pushing the left eye lens (510, 610, 910, 1010) and the right eye lens (520, 620, 920, 1020) to rotate by about 90 degrees by using a stepper motor.

## Amended claims

### Amended claims in accordance with Rule 137(2) EPC.

**1.** An apparatus (500, 600, 900, 1000) for capturing a three-dimensional image, comprising:
a left eye lens unit (510, 610, 910, 1010), for capturing a left eye image;
a right eye lens unit (520, 620, 920, 1020), for capturing a right eye image, wherein there is a horizontal shift between the left eye lens unit (510, 610, 910, 1010) and the right eye lens unit (520, 620, 920, 1020);
a operation unit (630), disposed on the left eye lens unit (510, 610, 910, 1010) and the right eye lens unit (520, 620, 920, 1020), for respectively rotating the left eye lens unit (510, 610, 910, 1010) and the right eye lens unit (520, 620, 920, 1020) by 90 degrees when receiving a vertical photographing operation; and
a processing unit (640, 940, 1040), coupled to the left eye lens unit (510, 610, 910, 1010) and the right eye lens unit (520, 620, 920, 1020), for combining the left eye image and the right eye image captured by the rotated left eye lens unit (510, 610, 910, 1010) and right eye lens unit (520, 620, 920, 1020) such that a three-dimensional vertical image is perceived when the left eye image and right eye image are displayed to a user.

**2.** The apparatus as claimed in claim 1, further comprising:
an input unit (930, 1030), for receiving an input operation for a vertical photographing function of the apparatus (900, 1000) from a user.

**3.** The apparatus as claimed in claim 2, wherein the operation unit (630) comprises:
a first driving unit (950), disposed on the left eye lens unit (910), for rotating the left eye lens unit (910); and
a second driving unit (960), disposed on the right eye lens unit (920), for rotating the right eye lens unit (920).

**4.** The apparatus as claimed in claim 3, wherein the processing unit (940) further comprises being coupled to the input unit (930), the first driving unit (950) and the second driving unit (960), for controlling the first driving unit (950) and the second driving unit (960) to respectively rotate the left eye lens unit (910) and right eye lens unit (920) by 90 degrees when the input unit (930) receives the vertical photographing operation.

**5.** The apparatus as claimed in claim 1, wherein the left eye lens unit (1010) comprises a first optical component (1012) for controlling a light entering the left eye lens unit (1010), and the right eye lens unit (1020) comprises a second optical component (1022) for controlling a light entering the right eye lens unit (1020).

**6.** The apparatus as claimed in claim 5, wherein the left eye lens unit (1010) further comprises a first light sensing component (1014) for sensing an intensity of the light entering the left eye lens unit (1010), and the right eye lens unit (1020) further comprises a second light sensing component (1024) for sensing an intensity of the light entering the right eye lens unit (1020).

**7.** The apparatus as claimed in claim 6, wherein the operation unit (1050, 1060) comprises respectively rotating the first light sensing component (1014) of the left eye lens unit (1010) and the second light sensing component (1024) of the right eye lens unit (1020) by 90 degrees so as to capture the left eye image and the right eye image when receiving the vertical photographing operation.

**8.** A method for capturing a three-dimensional image, adapted to an image capturing apparatus (500, 600, 900, 1000) having a left eye lens unit (510, 610, 910, 1010) and a right eye lens unit (520, 620, 920, 1020), wherein there is a horizontal shift between the left eye lens unit (510, 610, 910, 1010) and the right eye lens unit (520, 620, 920, 1020), the method comprising:
receiving (S710) a vertical photographing operation;
respectively rotating (S720) the left eye lens unit (510, 610, 910, 1010) and the right eye lens unit (520, 620, 920, 1020) by 90 degrees;
respectively capturing (S730) a left eye image and a right eye image by using the rotated left eye lens unit (510, 610, 910, 1010) and the right eye lens unit (520, 620, 920, 1020); and
combining (S740) the left eye image and the right eye image such that a three-dimensional image is perceived when the left eye image and right eye image are displayed to a user.

**9.** The method as claimed in claim 8, wherein the step of receiving the vertical photographing operation comprises:
receiving an input operation for a vertical photographing function of the image capturing apparatus (500, 600, 900, 1000) from a user or a mechanical operation for a mechanical rotation component of the image capturing apparatus (500, 600, 900, 1000) from a user.

**10.** The method as claimed in claim 8, wherein the step of respectively rotating the left eye lens unit (510, 610, 910, 1010) and the right eye lens unit (520, 620, 920, 1020) by 90 degrees comprises:
respectively pushing the left eye lens unit (510, 610, 910, 1010) and the right eye lens unit (520, 620, 920, 1020) to rotate by 90 degrees by using a stepper motor.
